# EUROPEAN PATENT SPECIFICATION

(11) **EP 4 633 911 B1**
(45) Date of publication and mention of the grant of the patent: **25.11.2026**
(21) Application number: 23841546.7
(22) Date of filing: 14.12.2023
(51) Int. Cl.: B29C 45/14

(54) **PROCESS FOR THE MANUFACTURE BY CO-INJECTION MOLDING OF PLASTIC MATERIAL OF A COMPONENT INTEGRANTING A HYDROPHOBIC POLYMERIC MEMBRANE AND CORRESPONDING PRODUCTION ISLAND**
VERFAHREN ZUR HERSTELLUNG EINES EINE HYDROPHOBE POLYMERMEMBRAN ENTHALTENDEN BAUTEILS DURCH CO-SPRITZGIESSEN UND ENTSPRECHENDE HERSTELLUNGSINSEL
PROCÉDÉ DE FABRICATION PAR MOULAGE PAR CO-INJECTION DE MATIÈRE PLASTIQUE D'UN COMPOSANT INTÉGRANT UNE MEMBRANE POLYMÈRE HYDROPHOBE ET ÎLOT DE PRODUCTION CORRESPONDANT

(30) Priority: 16.12.2022 IT 202200025881
(43) Date of publication of application: 22.10.2025
(73) Proprietor: Ergotech S.r.l., 10010 Settimo Vittone (TO) (IT)
(72) Inventor: DINI, Maurizio, 10010 Settimo Vittone (IT)
(86) International application number: PCT/IT2023/050281
(87) International publication number: WO 2024/127443

(56) References cited:
- EP-A1- 1 133 222
- EP-A1- 1 184 602
- WO-A1-95/21677
- DE-A1- 19 949 263

## Description

### Field of the invention

The present invention relates in general to the field of injection molding of plastic material, and, more particularly, it relates to a new and innovative process for manufacturing, by insert molding by injection of plastic material, a component integrating a hydrophobic polymeric membrane.

The present invention also relates to a corresponding production island for producing, in a production site used for the production by injection molding of plastic material, a component which integrates a hydrophobic polymeric membrane.

### State of the prior art

As known, the industry and manufacture of parts and components by injection molding of plastic material and the respective technology are in continuous and rapid expansion and are always finding new applications in industrial sectors and markets where other technologies were previously applied.

In view of this continuous expansion of the technology and of the corresponding manufacture by injection molding of plastic material, also the components and parts generally molded and produced with this technology are becoming increasingly complex and sophisticated, so as to continuously pose and raise new technical problems to be solved, in order to ensure, in the industrial production of these components and parts, both a high level of quality and a production cost which is as low as possible.

In particular, the components and the parts which can be made by means of the technology of injection molding of plastic material can integrate, in their structure, in a main body made of plastic material, one or more elements made of different materials, typically not of plastic material.

For example, as in the case of the present invention, the component can integrate into a main body of plastic material, one or more elements, of different materials, such as a hydrophobic polymer membrane and possibly a metallic insert.

In this case, more exactly, the technology which is applied in the wider field of the manufacture by injection molding of plastic material is often also called manufacture or production by insert molding by injection of plastic material, or manufacture by injection molding with plastic-metal.

In fact, in this insert molding by injection of plastic material, the manufacturing or production and molding of the component, integrating the additional non-plastic element or insert into the plastic body, is carried out by injecting the plastic material, in the molten state, into a single mould, with this additional non-plastic element or insert already previously inserted and prepared in the same mold, so as to receive the plastic material that is injected into the mold.

Therefore, the additional element or insert, not of plastic material and in particular of metal, integrates and cooperates with the injected plastic material, once solidified, so as to constitute a single component or piece, consisting of a molded body of plastic material with an additional element or insert integrated structurally therein.

As already mentioned, a special category and type of components, made by insert molding by injection of plastic material, which closely concerns the present invention, is that which comprises components which integrate, in their main body of plastic material, as additional parts made and produced separately from such plastic body, a hydrophobic polymeric membrane and, optionally, a metallic insert.

As known, this type of components, made by insert molding by injection of plastic material and integrating into a main body of plastic material one or more additional elements or inserts, typically not of plastic material, is frequently used and applied in the automotive components sector, i.e. in the so-called automotive sector, to manufacture and produce assemblies and devices, for example gear assemblies, or similar devices, typically intended to be mounted in a mounting line for mass production of automobiles and vehicles in general.

In particular, these components require certain specific parts thereof, for example consisting of pins and shafts, subjected to critical operating conditions, to exhibit characteristics and provide performances, such as for example a high resistance to stresses and wear, that these specific parts, whereas made of plastic material, would not be able to offer, even only partially.

Moreover, in these components, some parts are provided to perform special functions and exhibit certain characteristics, such that these parts cannot be made by molding plastic material together with the entire body of the component, but they must necessarily be made separately from the rest of the plastic component, to then be integrated into the plastic material which is injected into the mold to mold and produce the component.

For example, if the component of plastic material integrates a hydrophobic polymeric membrane, as in the case of the present invention, the latter can perform, in the component in which it is integrated, various functions, such as to allow a good flow and effective ventilation of air and at the same time to prevent the passage of water and other liquids, so as to avoid damages and drawbacks in the device of which the component is part.

It should also be pointed out that this hydrophobic polymeric membrane, on account of both the special polymeric material with which it is made and its special production process, usually has a considerable cost and therefore it has a not negligible weight in determining the overall cost of the component in which the hydrophobic polymer membrane is integrated.

Therefore, in relation to this special type of components produced by insert molding by injection of plastic material, the technical problem arises of producing and molding them with the highest possible quality, while at the same time trying to limit their production cost, that is, to reduce as much as possible the waste in the production of these components, in particular if they integrate a hydrophobic polymeric membrane, since having, as said, a not indifferent cost.

The solutions currently offered by the prior art to remedy and effectively solve the technical problem, as set forth above, are not many, also in view of the specificity of this technical problem.

Moreover, those few solutions available are not free from drawbacks, such as that of having quality and precision limits in the realization of the membranes provided to be integrated in the component or piece of plastic material, especially when the membrane has very small diameter dimensions, so as to imply an unacceptable level of processing waste, or that of involving times of feeding and dispensing of the individual membranes to the mold, to be integrated in the plastic material, still long and unsatisfactory, so as to extend the molding cycle and consequently increase the final production cost of the component or piece which integrates the hydrophobic polymer membrane.

In this regard, in order to give information that is as broad as possible, the following documents are mentioned, found and selected with a preliminary patent search, which in some way announce and refer, in common with the present invention, to the problem of producing with the maximum efficiency, by insert molding by injection of plastic material, components integrating a hydrophobic polymer membrane, or a metal insert or a similar element.
- De 102020208069 A1
- DE 102012219328 A1
- CN 103487175 A
- DE 102008038768 A1
- JP 2006092889 A
- JP2000244098 A
- US 5,925,205 A
- EP 1 184 602 A1
- EP 1 133 222 A1
- WO95/21677 A1
- DE19949263 A1

### Summary of the invention

It follows, in the context as illustrated above, that a first object of the present invention is to propose and provide a new process for manufacturing, by injection molding of plastic material, components, of various types and shapes and for various applications, specifically integrating a hydrophobic polymeric membrane, wherein this new process advantageously allows both to limit as much as possible the processing waste, in particular due to defects of the hydrophobic polymer membrane, so as to reduce the manufacturing cost of the plastic component integrating the polymeric membrane, this element being notoriously quite expensive, and to produce high-quality plastic components, integrating precise and small hydrophobic polymer membranes.

A second object of the invention, which can be linked to the first one, is also to develop a process for manufacturing, by injection molding of plastic material, components integrating a hydrophobic polymeric membrane and, optionally, also an insert, in particular of metal, which allows to reduce as much as possible the molding cycle time to produce the component integrating the hydrophobic polymer membrane and optionally the insert, without this reduction adversely affecting the quality of the component being produced.

A further object, which can be linked to the preceding ones, of the invention, can also be seen in that of realizing parts and components, in particular for the sector of the automotive components, integrating a polymeric and hydrophobic membrane and optionally an insert, which have a high level of quality, and moreover can be manufactured in an industrial way at low costs, so as to satisfy the precise and pressing requirements, in this sense, on the part of this important industrial sector constituted by the automotive components.

Another object, which can also be linked to the preceding ones, of the invention, is also to configure and design an island for the production, in a respective wider production site, by means of injection molding of plastic material, of components and parts integrating, in a body of plastic material, a hydrophobic polymeric membrane and, optionally, also an insert, typically made of metal, wherein this production island is characterized by a high production efficiency, so as to produce at a competitive cost these components and parts integrating the hydrophobic polymer membrane and the additional insert.

The above objects can be considered fully achieved by the process, having the features recited by the independent claim 1, for manufacturing and producing, by insert molding by injection of plastic material, a component integrating a hydrophobic polymer membrane, by the process, having the features recited by the dependent claim 2, for the manufacture and production, by injection molding of plastic material, of a component integrating a hydrophobic polymeric membrane and an insert, in particular metallic, by the component, having the features recited by claim 3, which is produced or can be produced by co-injection molding of plastic material through the process according to claim 1 or 2, and by the corresponding production island, installed in a production site, having the features recited by independent claim 4, to implement the process defined by independent claim 1 and dependant claim 2.

Further particular embodiments of the process for manufacturing and producing, by co-injection molding of plastic material, a component integrating a hydrophobic polymer membrane, and of the corresponding production island designed to produce, in a wider production site, components integrating a hydrophobic polymer membrane, are defined by the dependant claims.

### Advantages of the invention

As it will be apparent from the following description, the process, according to the present invention, for manufacturing and producing, by injection molding of plastic material, a component integrating a hydrophobic polymeric membrane, and the corresponding production island that implements, in a wider production site or plant, this process, offer a series of relevant and unique advantages, some of which have already been previously announced, among which the following ones are mentioned purely by way of example:
- a high quality of the component, produced by insert molding by injection of plastic material, and in particular of the hydrophobic polymer membrane which is produced and obtained from the hydrophobic polymer base sheet and then integrated into the plastic body of the same component, even when this membrane has very small diametrical dimensions, of a few millimetres;
- a low production cost of the component integrating the hydrophobic polymer membrane, also in the case it exhibits a particularly complex form;
- capability to meet the special and pressing requirements, from the automotive components sector, of components of high quality and a low production cost;
- very rapid, fast and reliable operations to feed and deliver to the mold the individual and single hydrophobic polymeric membranes, intended to be integrated in the plastic material injected into the same mold, so as to optimize and reduce the overall duration of the molding cycle to produce, by co-injection molding of plastic material, the component that integrates the hydrophobic polymer membrane, and consequently also reduce the respective total production cost.

### Brief description of the drawings

These and other objects, features and advantages of the present invention will become apparent from the following description of a preferred embodiment thereof, given purely by way of example with reference to the attached drawings, wherein :

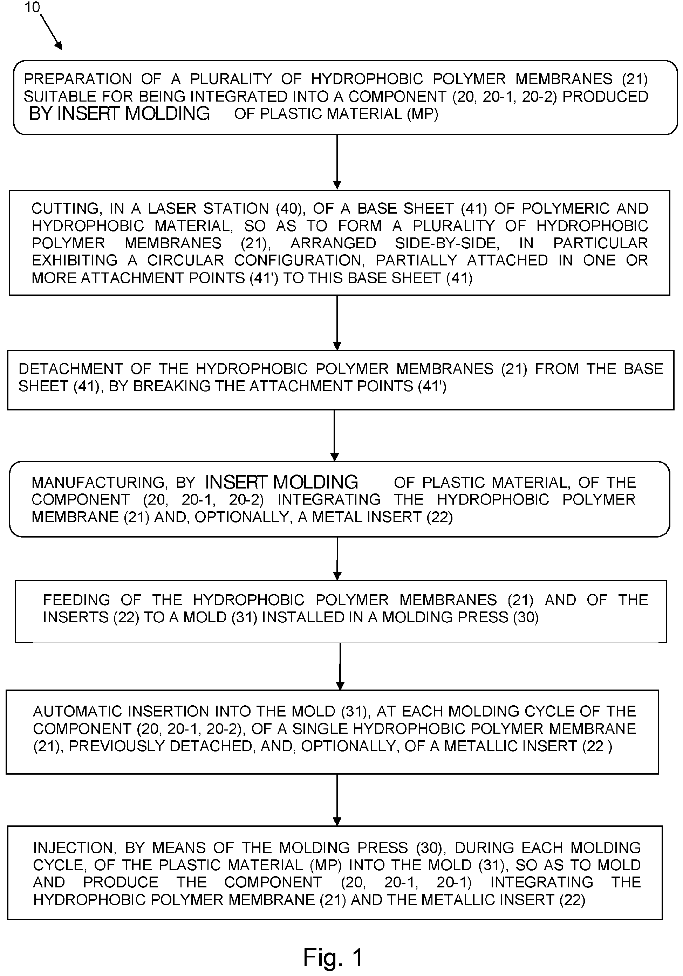

Fig. 1 is a flow chart, with operating blocks, illustrating the various steps of the process, according to the present invention, for manufacturing, by insert molding by injection of plastic material, a component integrating a hydrophobic polymeric membrane and, optionally, an insert, in particular of metal;

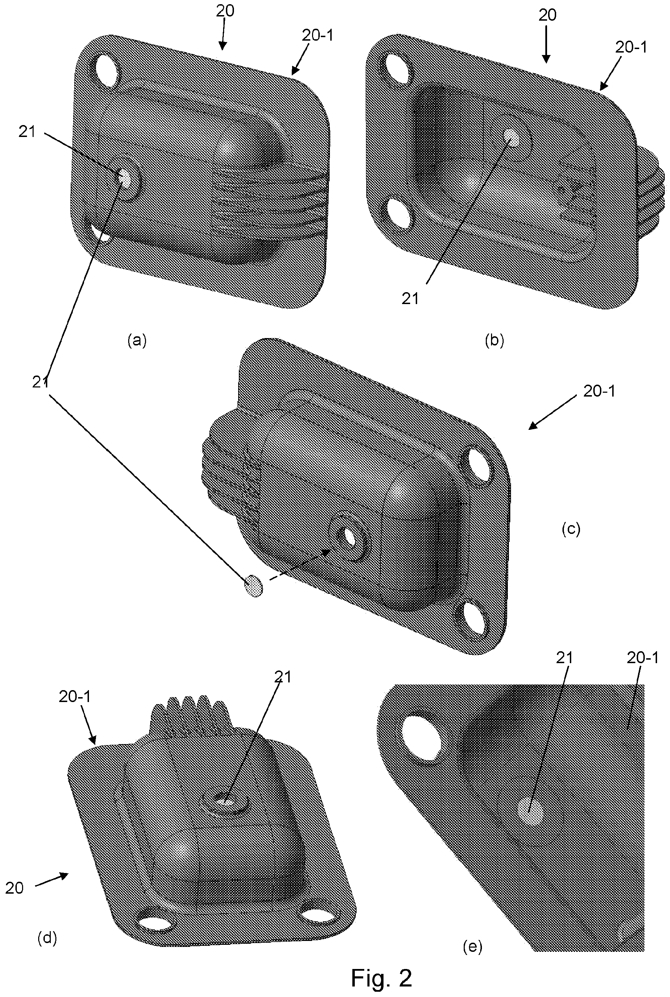

Fig. 2, divided into sections (a)-(e), is a series of graphic images showing an example of a component, integrating a hydrophobic polymer membrane, which is made and produced by the process of Fig. 1, according to the present invention, for manufacturing by insert molding by injection of plastic material;

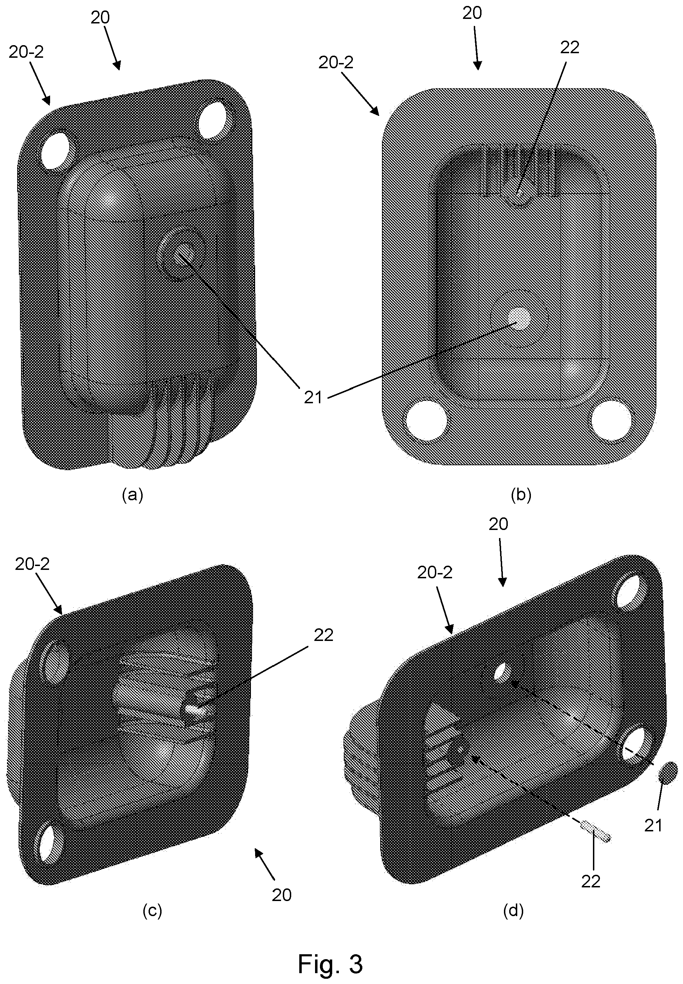

Figure 3, divided into sections (a)-(d), is a series of graphic images showing another example of a component, integrating a hydrophobic polymer membrane and a metal insert, which is made and produced by the process of Fig. 1, according to the present invention, for manufacturing of insert molding by injection of plastic material;

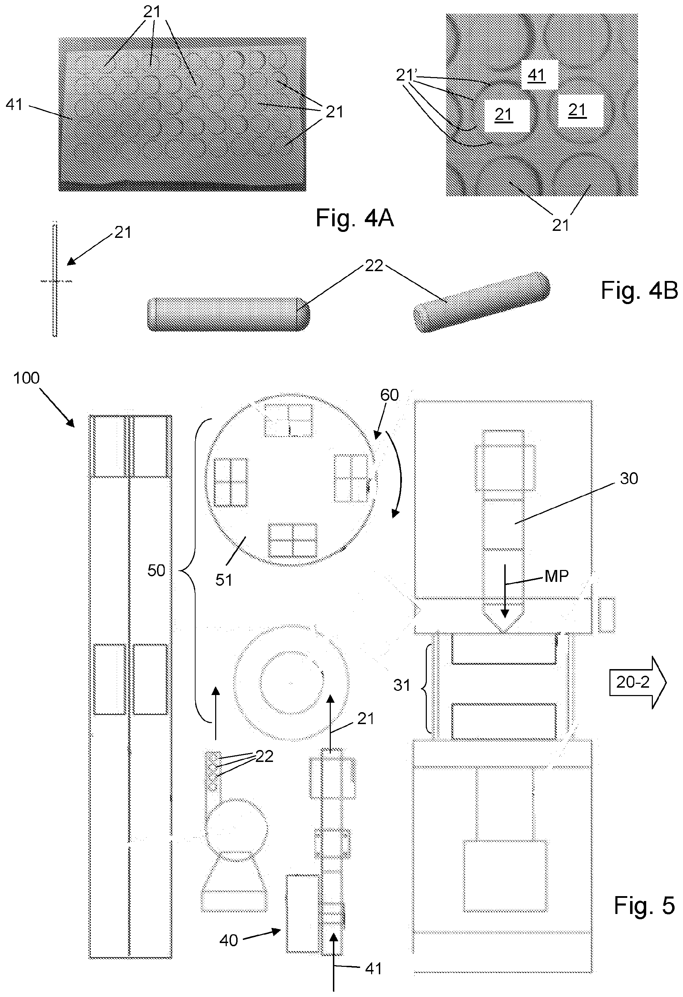

Fig. 4a is a graphical view showing a base sheet on which a plurality of hydrophobic polymer membranes are formed in the process of the invention to produce, by insert molding by injection of plastic material, the components of Figs. 2 and 3, and, in enlarged form, some of these hydrophobic polymer membranes;
Fig. 4b is a series of views showing in detail and in enlarged form the hydrophobic polymer membrane and the metal insert which are used in the process of the invention to produce and manufacture, by insert molding by injection of plastic material, the components of Figs. 2 and 3; and
Fig. 5 is a diagram of a production island, included in a respective wider production site, which implements the process of the invention for the production and manufacture, by insert molding by injection of plastic material, of components integrating a hydrophobic polymer membrane and, optionally, a metal insert.

### Detailed description of a preferred embodiment of the process, according to the present invention, for manufacturing, by insert molding by injection of plastic material, components integrating a hydrophobic polymer membrane and optionally a metal insert

With reference to the drawings and in particular to the operating block flow diagram of Fig. 1, a process, according to the present invention, for manufacturing, by insert molding by injection of plastic material, components integrating a hydrophobic polymeric membrane and, optionally, an insert, in particular of metal, is generally indicated with 10.

In detail, the process 10 of the invention comprises the following steps and sub-steps:
(A) providing, in a molding press 30, a mold 31 for the continuous production, by insert molding by injection of a plastic material MP, of a plurality of specimens of a component; generally indicated 20, each integrating a hydrophobic polymer membrane 21 and, optionally, a metal insert 22;
(b) preparing and providing a plurality of hydrophobic polymer membranes 21 each adapted to be integrated in each of the specimens of the component 20, that is in each component 20 which is produced, by means of the mold 31, by insert molding by injection of the plastic material MP; wherein the step (b) of providing said plurality of hydrophobic polymer membranes 21 comprises the following sub-steps:
   (b-1) feeding to a cutting station 40 of the laser type (from "light amplification by stimulated emission of radiation") a base sheet 41 consisting of a hydrophobic polymeric material;
   (b-2) cutting the base sheet 41 by means of the laser station 40 so as to form a plurality of hydrophobic polymer membranes 21, side by side, in particular each exhibiting a circular configuration, partially attached in one or more braces or attachment points 21' to such base sheet 41; and
   (b-3) detaching the hydrophobic polymer membranes 21 from the base sheet 41, breaking such attachment points 21', and feeding them to the mold 31 provided in the molding press 30;
(c) automatically inserting into the mold 31, during each molding cycle of the component 20, a single hydrophobic polymeric membrane 21 at a time, previously detached; and
d) injecting, by means of the molding press 30 and during this molding cycle, the plastic material MP into the mold 31, so as to mold and produce the component 20 integrating the hydrophobic polymeric membrane 21.

Fig. 2, divided into sections (a)-(e), is a series of graphic images showing, from different points of view, a first component, indicated 20-1, consisting for example of a lid, integrating a hydrophobic polymeric membrane, indicated 21, wherein this first component 20-1 is made and produced by the process 10, according to the present invention and illustrated in Fig. 1, for the manufacture by insert molding by injection of the plastic material MP.

Figure 3, divided into sections (a)-(d), is in turn a series of graphic images showing, from different points of view, a second component, indicated with 20-2, also consisting of an integral lid, like the first component 20-1, a hydrophobic polymeric membrane, indicated with 21, and in addition to the latter a metal insert, indicated with the reference numeral 22, wherein this second component 20-2 is also made and produced by the process 10, according to the present invention and illustrated in Fig. 1, for the manufacture, by insert molding by injection of the plastic material MP.

Each of the two components 20-1 and 20-2, produced by insert molding by injection of the plastic material MP, can in turn be part of a larger component or group, such as for example a gear box, typically used in the field of automotive components.

It is clear, however, that these components 20-1 and 20-2, shown in Figs. 2 and 3, each one consisting, as said, of a lid, represent only one of the possible components or pieces 20 which can be produced by the process 10 of the invention, by insert molding by injection of plastic material, and therefore must be considered, for the purposes of the description of such process, simply as examples among the many possible, without any limiting effect.

In particular, as already mentioned, these components 20-1 and 20-2, produced with the process 10 of the invention, are provided to be used in the field of components for automobiles and vehicles in general, that is, of the so-called "automotive", to be assembled with other parts so as to form groups and devices, such as oil pumps, fuel pumps, water pumps, filters, other assemblies and devices, well known to those skilled in the art, intended to be mounted in a mounting line of automobiles and vehicles in general, or to serve as spare parts of these assemblies and devices.

For completeness, Fig. 4a shows the base sheet 41 by which, according to the process 10 of the invention, the hydrophobic polymeric membranes 21 are formed in the laser station 40, and from which they will then be detached, to be subsequently inserted individually into the mold 30, where each of these hydrophobic polymeric membranes 21 receives the plastic material MP injected by the press, so as to produce, by insert molding by injection of plastic material, the component 20.

Again for reasons of completeness, Fig. 4b shows in detail and in enlarged form the polymeric membrane 21 and the metal insert 22 which are used in the process 10 of the invention to produce, by insert molding by injection of plastic material, the components 20-1 and 20-2 of Figs. 2 and 3.

The use, in the process 10 of the invention, of the laser station 40, allows to obtain hydrophobic polymeric membranes 21 of high quality and extremely precise, even when they exhibit small dimensions, as required for these components 20-1 and 20-1 intended for the automotive sector.

Fig. 5 in turn is a diagram showing, according to a further aspect of the present invention and in addition to the operating block diagram of Fig. 1 and to the graphic images of Figs. 2 and 3, an island or production station, generally indicated with 100, included in a respective wider production site, wherein this production island 100 implements the process 10 of the invention for the mass production and manufacture, by insert molding by injection of plastic material, of the component 20-2, or a similar component, integrating the hydrophobic polymer membrane 21 and the metallic insert 22.

In detail, the production island 100 comprises:
- a press 30;
- a mold 31 installed in the press 30;
- a laser station 40, fed by a base sheet 41, for cutting the hydrophobic polymer membranes 21;
- a robotized system 50 adapted to receive and be fed with the hydrophobic polymer membranes 21, cut, produced by the laser station 40, and the metal inserts 22, to prepare and to insert them individually into the mold 31, where the hydrophobic polymer membrane 21 and the metal insert 22 receive the plastic material MP, in the molten state, injected into the mold 31 by the press 30, so as to produce, by insert molding by injection of plastic material, the component 20-2; and
- a test or check station, designated by 60, where the hydrophobic polymer membranes 21, before being inserted into the mold 31, are individually tested as to their ability to let a given flow of air pass, as expected and required by their design and supply specifications.

In particular, the robotized system 50 may include a rotating table 51 adapted to rotate intermittently, as indicated by an arrow in Fig. 5, to receive the hydrophobic polymer membranes 21 and the metal inserts 22 and to feed them, one at a time, to the mold 31 of the press 30.

It is therefore clear from the foregoing description that the process 10 of the invention, proposed herein, for manufacturing, by insert molding by injection of plastic material, a component integrating a hydrophobic polymer membrane and, optionally, a typically metallic insert, fully achieves the intended objects, and in particular it allows to produce the component with a high level of quality, i.e. with integrated therein a highly precise hydrophobic polymeric membrane even in the case it is very small, and at a competitive production cost.

Similarly, the production island 100, proposed herein, fully achieves the intended aim of producing, in a production site, by insert molding by injection of plastic material, at a competitive industrial cost, components integrating a hydrophobic polymer membrane and optionally an insert.

### Variants

Of course, without prejudice to the principle and basic concept of the present invention, the embodiments and the respective details of the process, proposed herein, for the manufacture, by insert molding by injection of plastic material, of a component integrating a hydrophobic polymeric membrane, and the respective production station or island implementing such process, can vary widely with respect to what has been described and illustrated heretofore, without departing from the scope of the invention itself.

## Claims

1. Process (10) for the manufacture by insert molding by injection of plastic material (MP) of a component (20, 20-1, 20-2) integrating a hydrophobic polymeric membrane (21), comprising the following steps:
(a) providing, in a press (30), a mold (31) for the continuous production, by insert molding by injection of plastic material (MP), of a plurality of components (20, 20-1, 20-2) each integrating said hydrophobic polymeric membrane (21);
(b) preparing a plurality of hydrophobic polymeric membranes (21) able to be integrated in each of the component (20, 20-1, 20-2) produced, by means of said mold (31), by insert molding by injection of plastic material (MP);
wherein the step (b) of preparing said plurality of hydrophobic polymeric membranes (21) comprises the following sub-steps:
(b-1) feeding a base sheet (41) made of a hydrophobic polymeric material to a laser-type cutting station (40);
(b-2) cutting, by means of the cutting station (40) of the laser-type, the base sheet (41), so as to form a plurality of hydrophobic polymeric membranes (21), arranged side by side, in particular exhibiting a circular configuration, partially attached at one or more attachment points (41') to the base sheet (41); and
(b-3) detaching the hydrophobic polymeric membranes (21) from the base sheet (41), by breaking said attachment points (41'), and feeding them to the mold (31) provided in the press (30);
(c) automatically inserting into the mold (31), during the molding cycle of each component (20, 20-1, 20-2), a single hydrophobic polymeric membrane (21), one at the time, previously detached; and
(d) injecting, by means of the press (30) and during said molding cycle, the plastic material (MP) into the mold (31), so as to mold and produce the component (20, 20-1, 20-2) integrating the hydrophobic polymeric membrane (21).

2. Process (10) for the manufacture by insert molding by injection of plastic material (MP), according to claim 1, wherein said component (20, 20-2) integrates, in addition to said hydrophobic polymeric membrane (21), an insert (22), in particular metallic, comprising the following steps:
(e) providing, in a press (30), a mold (31) for the continuous production, by insert molding by injection of plastic material (MP), of a plurality of said components (20 , 20-2) each integrating said hydrophobic polymeric membrane (21) and said insert (22);
(c) automatically inserting into the mold (31), during the molding cycle of the component (20, 20-2), a single hydrophobic polymeric membrane (21), previously detached, and a single insert (22), one at the time; and
(d) injecting, by means of the press (30) and during said molding cycle, the plastic material (MP) into the mold (31), so as to mold and produce the component (20, 20-2) integrating the hydrophobic polymeric membrane (21) and the insert (22).

3. Production island (100) to produce in a production site by insert molding by injection of plastic material (MP) a component (20, 20-1, 20-2) integrating a hydrophobic polymeric membrane (21) and, optionally, an insert (22), in particular metallic, wherein said production island (100) is configured to implement the process according to claim 1 or 2.

4. Production island (100) according to claim 3, comprising a robotic system (50) adapted to receive and be fed with the hydrophobic polymeric membranes (21), cut, produced by the laser-type station (40), and with the inserts (22), and to prepare and insert them individually into the mold (31), one at a time, where the hydrophobic polymeric membrane (21) and the insert (22) receive the plastic material (MP), in the molten state, injected into the mold (31) by the press (30), so as to produce, by insert molding by injection of plastic material, the component (20, 20-1, 20-2).

5. Production island (100) according to claim 4, wherein said robotic system (50) comprises a rotating platform (51) suitable for receiving and being fed with the hydrophobic polymeric membranes (21), cut, which are prepared in the laser-type station (40).

6. Production island (100) according to any one of claims 3 to 5, further comprising a test station (60), where the hydrophobic polymeric membranes (21), before being inserted into the mold (31), are individually tested to check their capability to let through a given flow of air.

## Patentansprüche

1. Prozess (10) zur Herstellung durch Einlege-Spritzgießen von Kunststoffmaterial (MP) von einer Komponente (20, 20-1, 20-2), die eine hydrophobe Polymermembran (21) integriert, umfassend die folgenden Schritte:
(a) Bereitstellen, in einer Presse (30), einer Form (31) für die kontinuierliche Herstellung, durch Einlege-Spritzgießen von Kunststoffmaterial (MP), einer Vielzahl von Komponenten (20, 20-1, 20-2), die jeweils die hydrophobe Polymermembran (21) integrieren;
(b) Vorbereiten einer Vielzahl von hydrophoben Polymermembranen (21), die fähig sind, in jede der mittels der Form (31) durch Einlege-Spritzgießen von Kunststoffmaterial (MP) hergestellten Komponenten (20, 20-1, 20-2) integriert zu werden;
wobei der Schritt (b) des Vorbereitens der Vielzahl von hydrophoben Polymermembranen (21) die folgenden Teilschritte umfasst:
(b-1) Zuführen eines Grundbogens (41), der aus hydrophobem Polymermaterial gefertigt ist, zu einer Schneidstation (40) vom Lasertyp;
(b-2) Schneiden, mittels der mittels der Schneidstation (40) vom Lasertyp, des Grundbogens (41), um eine Vielzahl von hydrophoben Polymermembranen (21) zu bilden, die nebeneinander angeordnet sind, insbesondere eine kreisförmige Konfiguration aufweisen und an einem oder mehreren Befestigungspunkten (41') teilweise an dem Grundbogen (41) befestigt sind; und
(b-3) Ablösen der hydrophoben Polymermembranen (21) von dem Grundbogen (41) durch Aufbrechen der Befestigungspunkte (41') und Zuführen desselben in die in der Presse (30) bereitgestellte Form (31);
(c) automatisches Einsetzen in die Form (31), während des Formzyklus von jeder Komponente (20, 20-1, 20-2), jeweils einer einzelnen hydrophoben Polymermembran (21), die zuvor abgelöst wurde; und
(d) Einspritzen, mittels der Presse (30) und während des Formzyklus, des Kunststoffmaterials (MP) in die Form (31), um die Komponente (20, 20-1, 20-2), die die hydrophobe Polymermembran (21) integriert, zu formen und herzustellen.

2. Prozess (10) zur Herstellung durch Einlege-Spritzgießen von Kunststoffmaterial (MP) nach Anspruch 1, wobei die Komponente (20, 20-2) zusätzlich zur hydrophoben Polymermembran (21) einen Einsatz (22), insbesondere aus Metall, integriert, umfassend die folgenden Schritte:
(e) Bereitstellen, in einer Presse (30), einer Form (31) für die kontinuierliche Herstellung durch Einlege-Spritzgießen von Kunststoffmaterial (MP) einer Vielzahl der Komponenten (20, 20-2), die jeweils die hydrophobe Polymermembran (21) und den Einsatz (22) integrieren;
(c) automatisches Einsetzen in die Form (31), während des Formzyklus der Komponente (20, 20-2), jeweils einer einzelnen hydrophoben Polymermembran (21), die zuvor abgelöst wurde; und eines einzelnen Einsatzes (22); und
(d) Einspritzen, mittels der Presse (30) und während des Formzyklus, des Kunststoffmaterials (MP) in die Form (31), um die Komponente (20, 20-2), die die hydrophobe Polymermembran (21) und den Einsatz (22) integriert, zu formen und herzustellen.

3. Produktionsinsel (100) zur Herstellung an einem Produktionsstandort durch Einlege-Spritzgießen von Kunststoffmaterial (MP) von einer Komponente (20, 20-1, 20-2), die eine hydrophobe Polymermembran (21) und optional einen Einsatz (22), insbesondere aus Metall, integriert, wobei die Produktionsinsel (100) so konfiguriert ist, dass sie den Prozess nach Anspruch 1 oder 2 implementiert.

4. Produktionsinsel (100) nach Anspruch 3, umfassend ein Robotersystem (50), das so angepasst ist, dass es die geschnittenen, von der Station (40) vom Lasertyp hergestellten hydrophobe Polymermembranen (21) und die Einsätze (22) empfängt und mit diesen beschickt wird, um sie jeweils einzeln vorzubereiten und in die Form (31) einzusetzen, wo die hydrophobe Polymermembran (21) und der Einsatz (22) das Kunststoffmaterial (MP) im geschmolzenen Zustand empfangen, das von der Presse (30) in die Form (31) eingespritzt wird, um durch Einlege-Spritzgießen von Kunststoffmaterial die Komponente (20, 20-1, 20-2) herzustellen.

5. Produktionsinsel (100) nach Anspruch 4, wobei das Robotersystem (50) eine drehende Plattform (51) umfasst, die geeignet ist, um die geschnittenen hydrophoben Polymermembranen (21), die in der Station (40) vom Lasertyp vorbereitet wurden, zu empfangen und mit ihnen beschickt zu werden.

6. Produktionsinsel (100) nach einem der Ansprüche 3 bis 5, weiter umfassend eine Teststation (60), in der die hydrophoben Polymermembranen (21), bevor sie in die Form (31) eingesetzt werden, einzeln getestet werden, um ihre Fähigkeit zu prüfen, einen bestimmten Luftstrom durchzulassen.

## Revendications

1. Processus (10) de fabrication par moulage par insertion par injection de matière plastique (MP) d'un composant (20, 20-1, 20-2) intégrant une membrane polymère hydrophobe (21), comprenant les étapes suivantes :
(a) la fourniture, dans une presse (30), d'un moule (31) pour la production continue, par moulage par insertion par injection de matière plastique (MP), d'une pluralité de composants (20, 20-1, 20-2) intégrant chacun ladite membrane polymère hydrophobe (21) ;
(b) la préparation d'une pluralité de membranes polymères hydrophobes (21) pouvant être intégrées dans chacun des composants (20, 20-1, 20-2) produits, au moyen dudit moule (31), par moulage par insertion par injection de matière plastique (MP) ;
dans lequel l'étape (b) de préparation de ladite pluralité de membranes polymères hydrophobes (21) comprend les sous-étapes suivantes :
(b-1) l'amenée d'une feuille de base (41) en matière polymère hydrophobe à une station de découpe de type laser (40) ;
(b-2) la découpe, au moyen de la station de découpe (40) de type laser, de la feuille de base (41), de manière à former une pluralité de membranes polymères hydrophobes (21), agencées côte à côte, présentant notamment une configuration circulaire, partiellement fixées à la feuille de base (41) par un ou plusieurs points de fixation (41') ; et
(b-3) le détachement des membranes polymères hydrophobes (21) de la feuille de base (41), en brisant lesdits points de fixation (41'), et en les amenant dans le moule (31) fourni dans la presse (30) ;
(c) l'insertion automatique dans le moule (31), pendant le cycle de moulage de chaque composant (20, 20-1, 20-2), d'une seule membrane polymère hydrophobe (21), une à la fois, préalablement détachée ; et
(d) l'injection, au moyen de la presse (30) et pendant ledit cycle de moulage, de la matière plastique (MP) dans le moule (31), afin de mouler et de produire le composant (20, 20-1, 20-2) intégrant la membrane polymère hydrophobe (21).

2. Processus (10) de fabrication par moulage par insertion par injection de matière plastique (MP), selon la revendication 1, dans lequel ledit composant (20, 20-2) intègre, en plus de ladite membrane polymère hydrophobe (21), un insert (22), notamment métallique, comprenant les étapes suivantes :
(e) la fourniture, dans une presse (30), d'un moule (31) pour la production continue, par moulage par insertion par injection de matière plastique (MP), d'une pluralité desdits composants (20, 20-2) intégrant chacun ladite membrane polymère hydrophobe (21) et ledit insert (22) ;
(c) l'insertion automatique dans le moule (31), pendant le cycle de moulage du composant (20, 20-2), d'une seule membrane polymère hydrophobe (21), préalablement détachée, et d'un seul insert (22), un à la fois ; et
(d) l'injection, au moyen de la presse (30) et pendant ledit cycle de moulage, de la matière plastique (MP) dans le moule (31), afin de mouler et de produire le composant (20, 20-2) intégrant la membrane polymère hydrophobe (21) et l'insert (22).

3. Îlot de production (100) destiné à produire sur un site de production, par moulage par insertion par injection de matière plastique (MP), un composant (20, 20-1, 20-2) intégrant une membrane polymère hydrophobe (21) et, éventuellement, un insert (22), notamment métallique, dans lequel ledit îlot de production (100) est configuré pour mettre en œuvre le procédé selon la revendication 1 ou 2.

4. Îlot de production (100) selon la revendication 3, comprenant un système robotisé (50) adapté pour recevoir des et être alimenté en membranes polymères hydrophobes (21), découpées et produites par la station de type laser (40), et en inserts (22), et pour les préparer et les insérer individuellement dans le moule (31), un à la fois, dans lequel la membrane polymère hydrophobe (21) et l'insert (22) reçoivent le matière plastique (MP), à l'état fondu, injecté dans le moule (31) par la presse (30), afin de produire, par moulage par insertion par injection de matière plastique, le composant (20, 20-1, 20-2).

5. Îlot de production (100) selon la revendication 4, dans lequel ledit système robotisé (50) comprend une plateforme rotative (51) adaptée à la réception et à l'alimentation en membranes polymères hydrophobes (21), découpées, qui sont préparées dans la station de type laser (40).

6. Îlot de production (100) selon l'une quelconque des revendications 3 à 5, comprenant en outre une station de test (60), où les membranes polymères hydrophobes (21), avant d'être insérées dans le moule (31), sont testées individuellement pour vérifier leur capacité à laisser passer un flux d'air donné.
